# EUROPEAN PATENT SPECIFICATION

(11) **EP 3 580 802 B1**
(45) Date of publication and mention of the grant of the patent: **30.08.2023**
(21) Application number: 18706223.7
(22) Date of filing: 09.02.2018
(51) Int. Cl.: H01M 8/18, H01M 8/2465, H01M 8/0254, H01M 8/026, H01M 8/04276

(54) **FLOW-BY ELECTRODE UNIT AND USE THEREOF, REDOX FLOW BATTERY SYSTEM AND USE THEREOF, METHOD OF MANUFACTURING A FLOW-BY ELECTRODE UNIT, METHOD OF OPERATING A REDOX FLOW BATTERY SYSTEM**
DURCHFLUSS ELEKTRODE-EINHEIT UND DIE VERWENDUNG DAVON, REDOX-FLOW BATTERIE-SYSTEM UND DIE VERWENDUNG DAVON, VERFAHREN ZUR HERSTELLUNG EINER DURCHFLUSS ELEKTRODE-EINHEIT, VERFAHREN ZUM BETRIEB EINES REDOX-FLOW BATTERIE-SYSTEMS
DISPOSITIF D'ÉLECTRODE DE DÉBIT ET SON UTILISATION, SYSTÈME DE BATTERIE À REDOX-FLOW ET SON UTILISATION, PROCÉDÉ DE FABRICATION D'UNE ÉLECTRODE DE DÉBIT, PROCÉDÉ DE FONCTIONNEMENT D'UN SYSTÈME DE BATTERIE À REDOX-FLOW

(30) Priority: 10.02.2017 WO PCT/EP2017/000187
(43) Date of publication of application: 18.12.2019
(73) Proprietor: CMBlu Energy AG, 63755 Alzenau (DE)
(72) Inventor: KERKER, Steffen, 35396 Giessen (DE); STRAUB, Wolfgang, 63877 Sailauf (DE); GEIGLE, Peter, 63755 Alzenau (DE); KRAWCZYK, Nastaran, 36041 Fulda (DE)
(74) Representative: Graf von Stosch Patentanwaltsgesellschaft mbH
(86) International application number: PCT/EP2018/053357
(87) International publication number: WO 2018/146282

(56) References cited:
- CN-A- 101 443 938
- CN-A- 104 393 308
- CN-A- 104 393 308
- CN-B- 103 579 658
- CN-B- 103 579 658
- DE-B3-102009 018 028
- DE-B3-102009 018 028
- JP-A- 2003 157 885
- JP-A- 2003 157 885
- JP-B2- 4 599 832
- US-A- 4 197 169
- US-A1- 2011 223 450

## Description

The present invention is directed to a flow-by electrode unit and a use thereof, a redox flow battery system and a use thereof, a method of manufacturing a flow-by electrode unit, and a method of operating a redox flow battery system.

Redox flow batteries (RFBs) are electrochemical storage devices for storing electrical energy in the form of chemical energy contained in molecules and/or ions, which form reversible redox couples. That means the molecules and/or ions are reversibly reducible and oxidizable. Within the following description the term "molecules" is used as a definition encompassing neutral or charged molecules and/or ions.

The principle of redox flow batteries is known in the art. A specific type of redox flow batteries, the All Vanadium Redox Flow Battery has been developed by Maria Skyllas-Kazacos at the University of New South Wales in the 1980s and has been patented (AU575247). Since then, RFBs have been used for niche applications. In the last years, due to the growing interest in renewable energies and the resulting demand for energy storage/supply applications, an increasing attention has been directed to commercial utilization of RFB technology.

As compared to other batteries, RFBs provide several advantages when used for large scale energy storage devices. RFBs show a low degree of self-discharge, a high resistance to depth discharge, and substantially no irreversible loss of capacity, in contrast to other batteries. The decisive difference with respect to other battery technologies is the spacial separation of the storage medium from the part of the battery that provides conversion of chemical energy to electrical energy and vice versa. This allows in addition an exchange of individual components of the RFB.

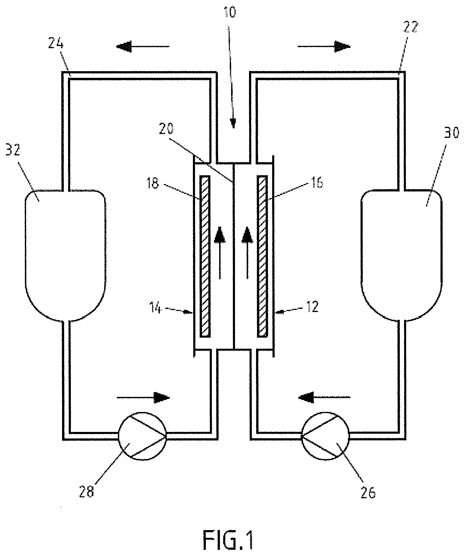

Fig. 1 schematically illustrates a configuration of a RFB. Conversion of energy is effected in a cell 10 consisting of two hydraulically distinct spaces, the socalled half-cells 12, 14. The half-cells 12, 14 each include an electrode 16, 18 and are separated by a selectively ion-permeable membrane 20. The chemical species in which energy is stored are dissolved in a fluid, in particular in a liquid, which is ion-conductive and thus allows transfer of charge carriers. When dealing with RFBs such a solution of storage material and ion-conductive fluid is simply called electrolyte. The combination of two half-cells requires two different electrolytes including different redox couples of molecules and/or ions. The difference in redox potential between the two redox couples results in an off-load voltage of the cell. The half-cell having the higher redox potential represents the positive electrical pole of the cell and is called positive side. The half-cell having the lower redox potential represents the negative electrical pole and is called negative side.

During operation of the RFB, the two electrolytes are routed through the respective half-cells 12, 14 (see arrows in Fig. 1) and thereby produce a voltage between the two electrodes 16, 18. For electrolyte routing, each half-cell 12, 14 is typically connected via a ducting 22, 24 including a pump 26, 28 to an electrolyte reservoir, e.g. tanks 30, 32. After coupling of the electrodes via an external electric circuit (not shown), within the negative half-cell electrons from the chemical species are transferred to the electrode, from which the electrons are conducted via the external electrical circuit to the electrode of the positive half-cell, in which they are transferred to the chemical species having the higher redox potential. This kind of charge transfer via the external electrical circuit can be utilized as electrical current. In order to effect electrical neutrality in both electrolytes, a simultaneous flow of charges in terms of ions or charged molecules through the membrane separating the two half-cells is required. This procedure is reversible by connecting a power source to the external circuit, the voltage of the power source being larger than the potential difference of the two electrodes. The transfer of charge is thereby reversed and electrical energy is stored in the battery until substantially all electrical species within the electrolytes have changed their oxidation states. The resulting electrolytes are separately stored in the external tanks 30, 32 from which they are separately circulated, using ductings 22, 24 and pumps 26, 28, through the respective half-cells 12, 14 during charging or discharging.

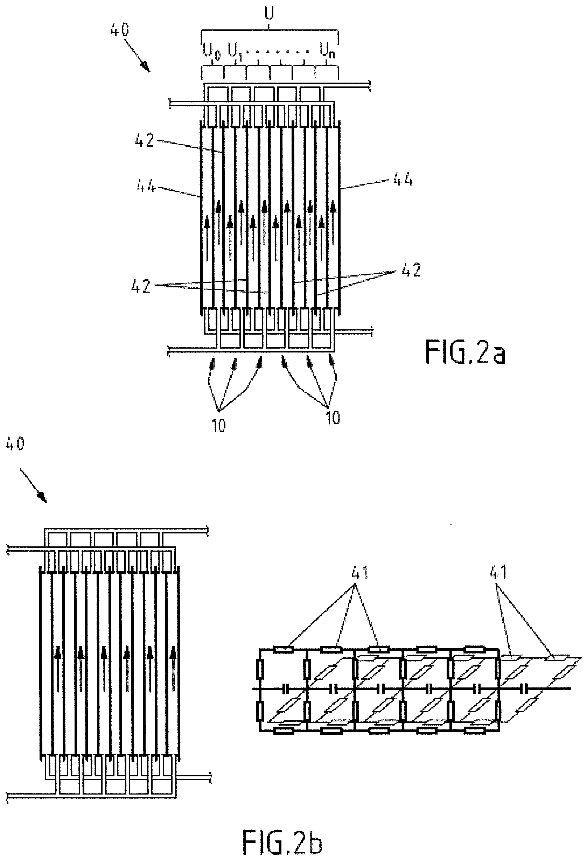

Several cells 10 can be coupled in electrical series forming a stack, similar to common batteries. Fig. 2a presents a prior art structure of a battery stack 40 used in a RFB. Within the stack 40 the cells 10 are separated by bipolar plates 42. The stack 40 is confined by two endplates 44. The total voltage U of the stack 40 results from the sum of the individual cell voltages U₁ to Uₙ, as indicated in Fig. 2a. Typically, the electrolyte is supplied in parallel to the individual cells. That means that all positive half-cells are fluidly and/or hydraulically connected in parallel, and within the positive half-cells electrolyte is typically flown in the same flow direction (see arrows in Fig. 2a). The same holds for all negative half-cells. Within each cell 10, the electrolyte streams of the positive and negative half-cells may be flown in the same flow direction as shown in Fig. 2a (equicurrent) or in the opposite flow directions (countercurrent).

Fig. 2b shows the battery stack 40 and its equivalent network diagram of resistances. Due to the fact that the electrolyte is supplied in parallel to corresponding individual half-cells, the configuration of the stack requires a high number of hydraulic and/or fluid connections between the respective half-cells. The hydraulic/fluid connections through which electrolyte is flown and which are arranged between corresponding half-cells are electrically conductive. Thus, the hydraulic/fluid connections between the half-cells reflect a high number of shunts 41 which are equivalent to electrical resistances.

The processes within each cell 10 correspond to the ones of chemical vessels in which reactions are run at an interface between a solid and a liquid phase (fixed bed reactor, flow reactor). The electrical current which may be achieved by a cell is determined by the transport of the molecules and/or ions within the electrolyte to the surface of the electrodes. The transport to the electrode surface is dominated by several transport mechanisms. The transport mechanisms can be affected by the construction of the redox flow cells. The main transport mechanisms are convective transport and diffusive transport. The convective mass transport can be influenced by the volume flow of the electrolytes supplied to the cells. To provide a certain current per time unit, a stoichiometric amount of molecules and/or ions has to be transferred into the cell, in order to allow for the required charge amounts. In practice, a multiple stoichiometric excess of ions and/or (charged) molecules is fed into the cell, in order to minimize the potential gradients within the electrolyte along the flow direction. Therefore, during passage of the electrolyte through the cell, for the molecules a level of utilization which is less than 10 % is desirable. In this context the term "limiting current density" is used for specifying the maximum possible current with respect to the geometric electrode surface parallel to the flow direction at a particular volume flow through the cell.

Fluid dynamical boundary layers are formed at the boundary between surfaces, against which the fluids are flown, and the fluids. Within the fluid dynamical boundary layers, the mass transport proceeds nearly exclusively by diffusive mass transport which is comparatively slow. According to the laws of diffusion, the surface related mass stream through a boundary layer towards a surface depends on the thickness of the boundary layer and the concentration gradient perpendicular to the surface. The concentration gradient within a RFB is determined by the actual concentration of the molecules at a certain state of charge of the battery and may be influenced just in a limited extent by the volume flow through the half-cells.

Energy efficiency of RFBs is determined by the voltage efficiency and the Coulomb efficiency or charge efficiency. In systems for energy storage using RFBs, losses occur due to parasitic loads, for instance due to battery management system and pumps. Substantial voltage losses observed in operating RFBs can be correlated to three different effects, as set out below.

One effect, which provides energy losses, is due to an activation energy formed by a voltage, also called activation overvoltage, which has to be overcome starting from the equilibrium potential. This activation energy is required, in order to allow for transfer of electrons between the molecule to be reacted and the active groups at the electrode surface. Such losses occur already at very low current densities.

A second effect is based on ohmic losses which appear in each component of the cell through which charge carriers have to be moved, e.g. electrical current conductors, electrodes, electrolytes, membrane. Ohmic losses are directly proportional to the currents flowing through the cell. The contributions of these losses occurring in the individual, serially connected components add in form of overvoltages to the total losses of the cell system. Due to the fact that ohmic losses are proportional to the current densities, they form a main part of the whole losses at medium and higher current densities. Hence, in order to reduce such losses, conductor and electrode materials having a low electrical resistance are typically chosen. The specific electrical resistance of the electrolyte is dependent on its composition at a certain temperature, its total resistance can however be reduced by small cell distances. For the membrane a material is typically selected providing a compromise between high conductivity and high selectivity, which are inverse proportional.

A third effect is due to transport limitation. The current extracted from the cell is dependent on the mass stream of molecules which can be transferred to the electrode surface. At low current densities the convective mass transport through the stream and the diffusive mass transport through the fluid dynamical boundary layer are sufficient and do not present any limitation. At high current densities, however, the diffusive mass transport is limiting and does not provide any increase in electrical current in case of a further reduction of the load resistance within the external electrical circuit. The cell voltage is further reduced and a constant current is reached, which is called diffusion threshold current. This limitation happening at high current densities is observed already at lower current densities in case of low states of charge of the RFB, since the driving force, which is the concentration difference between electrolyte and electrode surface, is reduced. When flow-by electrodes are used in the RFB, the effect of transport limitation occurs already at lower volume flows of the electrolyte, as compared to flow-through electrodes.

In prior art RFBs, typically flow-through (FT) electrodes formed of carbon materials are used. The flow-through electrodes consist of porous and filamentous and/or fibrous material, such as carbon felt, carbon fleece, and/or carbon paper, through which the electrolyte is flown. The whole FT electrode is formed of the very same carbon material which in some cases is mechanically not stable. The electrical current is conducted by filaments and/or fibers of the material. Typically, the FT electrode is contacted to a bipolar plate by pressure. This configuration results in voltage losses which are due to ohmic losses. Further voltage losses occur due to a low activity of the electrode surface. The electrode surface is often additionally activated, in order to allow a high electrochemical activity. Electrode materials and bipolar plates increase the costs. An inhomogeneous current distribution within the porous FT electrode material reduces the performance of the FT electrode. Moreover, for flowing an electrolyte through a FT electrode, a high pressure within the cell is required. In addition, the electrolyte is typically supplied in parallel to the cells, i.e. to the half-cells through which identically charged electrolyte is flown.

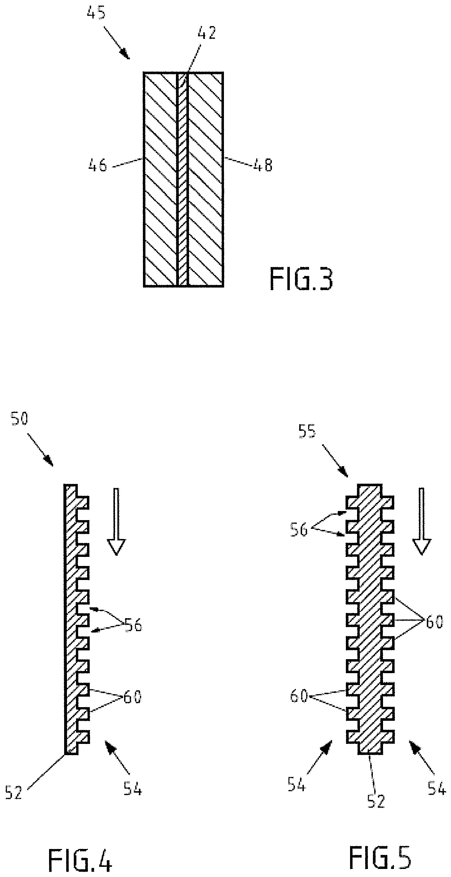

The flow-through electrodes have a large surface with functional groups for performing the electrochemical reaction. At the surface of the material, the electrolyte shows convective and diffusive mass transport. Electrons produced at the filament surfaces are transported via graphitic structures of the filaments to current conductors, the socalled bipolar plates of the cells. Fig. 3 schematically shows a corresponding combination 45 of two FT electrodes 46, 48 and a bipolar plate 42. The manufacturing costs of producing the FT electrodes as well as of producing the bipolar plates used with FT electrodes are high due to the kind and the structure of the respective materials.

Within cells of known RFBs utilizing FT electrodes, the flow velocity is in a range of less than 10 mm/s. Because of small distances between the individual filaments of the FT electrode material and because of eddy diffusion, the electrolyte is homogeneously mixed in the area around the filaments and shows short diffusion paths. Thus, the predominant limitation of the electrochemical reaction is not due to mass transport but due to surface activity. The required volume flow through the cell depends on the electrolyte utilization. When using large surfaces a large volume flow is required. A large volume flow results in a high flow resistance. The counter pressure produced thereby results in a limitation of the size or length of the cell. The counter pressure increases with increasing cell length which is actually flown through. Since the cell sizes of known commercial RFBs are about 0.25 m² and the flown through length is less than 0.5 m, pressures of several bars, e.g. 3 to 5 bars, are required for streaming the cells. Low flow velocities and inhomogeneity of the hydraulic permeability of the filamentous material, as well as irreversible compacting during storage or mounting of the material may result in an inhomogeneous flow through the cell. The cell performance is irreversibly reduced by an inhomogeneous distribution of current density, since high current densities result in a fast degradation of the activity of the FT electrode material.

At the beginning of RFB technology, flow-by (FB) electrodes formed of carbon cloth were tested. However, when used in the cells of RFBs, the material of the FB electrodes was degraded due to high current densities and a resulting evolution of oxygen. Moreover, a limitation due to mass transport affecting the cell performance was observed at low flow velocities of the electrolyte along the electrode surface. CN103 579 658 discloses a wave shaped flow field for a redox battery.

Object of the invention is to provide a flow-by electrode unit and a redox flow battery system each showing improved performances, and an improved method of operating a redox flow battery system.

This object is achieved by a flow-by electrode unit according to claim 1, a use according to claim 40, a use according to claim 41, a method of manufacturing a flow-by electrode unit according to claim 42, a redox flow battery system according to claim 43, a use according to claim 49, and a method of operating a redox flow battery system according to claim 50.

In a first embodiment, a flow-by electrode unit, in particular for a redox flow battery, is provided, including a flow-by electrode including a substrate and having at least one open flux surface structure.

A second embodiment is directed to a use of a flow-by electrode unit according to above embodiment in an energy storage and/or supply device, in particular in a redox flow battery.

A third embodiment relates to a use of the flow-by electrode unit according to above embodiment for storing and/or supplying energy.

In a forth embodiment, a method of manufacturing a flow-by electrode unit according to above first embodiment is provided, including forming an electrode body including a substrate and at least one open flux surface structure.

According to a fifth embodiment a redox flow battery system is provided, including at least two cells each including a negative half-cell and a positive half-cell separated by a membrane; a first half-cell group formed by at least two of the negative half-cells which are fluidly combined by a first electrolyte ducting fluidly connected to a negative half-cell electrolyte reservoir; a second half-cell group formed by at least two of the positive half-cells which are fluidlycombined by a second electrolyte ducting fluidly connected to a positive half-cell electrolyte reservoir; wherein at least one or each of the half-cells includes a flow-by electrode unit according to above first embodiment.

A sixth embodiment is directed to a use of the redox flow battery system of above embodiment for storing and/or supplying energy.

In a seventh embodiment a method of operating a redox flow battery system according to above fifth embodiment is provided, including flowing a negative half-cell electrolyte via a first electrolyte ducting from a negative half-cell electrolyte reservoir through a first half-cell group of fluidly combined negative half-cells and back to the negative half-cell electrolyte reservoir; and flowing a positive half-cell electrolyte via a second electrolyte ducting from a positive half-cell electrolyte reservoir through a second half-cell group of fluidly combined positive half-cells and back to the positive half-cell electrolyte reservoir; wherein the negative half-cell electrolyte is a fluid and includes reversibly reducible and oxidizable chemical species of a first redox couple, and the positive half-cell electrolyte is a fluid and includes reversibly reducible and oxidizable chemical species of a second redox couple.

Some of the above mentioned embodiments will be described in more detail in the following description of typical embodiments with reference to the following drawings in which
- Fig. 1: schematically illustrates a configuration of a RFB;
- Fig. 2a: schematically illustrates a prior art structure of a battery stack used in a RFB;
- Fig. 2b: shows the battery stack of Fig. 2a and its equivalent network diagram of resistances;
- Fig. 3: schematically shows a prior art FT electrodes/bipolar plate combination;
- Fig. 4: schematically illustrates a flow-by electrode unit according to one embodiment of the invention;
- Fig. 5: schematically shows a flow-by electrode unit according to embodiments of the invention;
- Fig. 6: (A) schematically shows a plan view of the open flux surface structure of a flow-by electrode unit according to an embodiment of the invention; (B)-(D) illustrate the flow of the electrolyte over the surface structure and the turbulences induced by the flow barriers; E shows the profile of the U-shaped flow barriers.
- Fig. 7a: schematically illustrates an example of a redox flow battery system according to an embodiment of the invention; and
- Fig. 7b: schematically shows the example of Fig. 7a and its equivalent network diagram of resistances.

Within the following description of the drawings, the same reference numbers refer to the same components. Generally, only the differences with respect to the individual embodiments are described.

In one embodiment of the invention, a flow-by electrode unit, in particular for a redox flow battery, is provided, including a flow-by electrode which includes a substrate and has at least one open flux surface structure. In some examples, the flow-by electrode may have an electrode body including the substrate and the at least one open flux surface structure.

Due to the at least one open flux surface structure of the flow-by electrode according to embodiments of the invention, the flow of an electrolyte flowing against and/or along the electrode surface is at least partially guided or controlled. Thereby, a desired kind of flow is promoted which improves the performance of the flow-by electrode and/or the performance of an RFB including the flow-by electrode. For example, an electrolyte flow may be produced at the open flux surface structure, by which fluid dynamical boundary layers are influenced, in order to promote the electrochemical reaction. The size and/or presence of laminar boundary layers can be reduced. Moreover, stalling of the electrolyte flow reducing the thickness of laminar boundary layers may be achieved by the open flux surface structure. Such effects on laminar boundary layers result in a reduction of concentration polarization which is a consequence of diffusion boundary layers. Furthermore, due to the at least one open flux surface structure, the electrochemically active surface area of the flow-by electrode is increased. In addition, by the at least one open flux surface structure of the flow-by electrode according to embodiments, the flow resistance of the electrolyte is reduced. Therefore, using the flow-by electrode of embodiments, the size of cells of an RFB, in particular the length of the cells, may be advantageously increased.

By utilizing the flow-by electrode unit according to embodiments of the invention in e.g. an RFB, within the electrolyte flowing against and/or along the electrode surface an optimized mass transport promoting the cell performance is achieved. This is particularly due to a reduction of the laminar boundary layers of the electrolyte at the electrode surface, in which diffusive mass transport prevails. The laminar boundary layers are diminished by optimized flow management and/or flow control due to the open flux surface structure of embodiments. In addition, the flow-by electrode unit of embodiments allows directing an electrolyte flow having a high flow velocity against and along the surface of the flow-by electrode, without affecting the surface, but further reducing laminar boundary layers. Thus, by the open flux surface structure of the flow-by electrode unit according to embodiments of the invention, convective mass transport is promoted and the effect of transport limitation is reduced.

The at least one open flux surface structure can be provided in or on the substrate and/or may be supported by the substrate. In some examples of above embodiment, the surface of the flow-by electrode and/or of the open flux surface structure may be at least partially electrochemically active.

Fig. 4 schematically illustrates a flow-by electrode unit according to one embodiment of the invention. The flow-by electrode unit has a flow-by electrode 50 including a substrate 52 and having at least one open flux surface structure 54. The surface structure 54 can have one or more identical or different 3-dimensional shapes, also called profile(s) herein.

In Fig. 5 an embodiment of the flow-by electrode unit including a flow-by electrode 55 is schematically shown, wherein the substrate 52 is positioned between two open flux surface structures 54. In this embodiment, the surface structures 54 may have identical or different 3-dimensional shapes or profiles at each side of the substrate.

In some embodiments, the flow-by electrode 50, 55 may be a profiled rectangular plate, which may have plan view geometric dimensions in a range of about 5 x 200 cm² to 50 x 70 cm². Some examples of flow-by electrodes according to the invention include an active electrode surface having plan view geometric dimensions in a range of about 5 x 200 cm² to 50 x 70 cm². According to embodiments, the flow-by electrode 50, 55 may have a plate thickness of about 0.1 to 5 mm, preferably 0.6 to 2 mm, and a height (perpendicular to the plan view and including the profile) of about 0.5 to 15 mm, preferably 0.5 to 5 mm, more preferably 0.5 to 3 mm.

According to one example of the embodiment shown in Fig. 5 the flow-by electrode unit includes or is a bipolar plate, which may be used in a battery, in particular for a redox flow battery. Another example is a modification of the embodiment shown in Fig. 4 wherein the flow-by electrode unit includes or is an endplate, e.g. a stack endplate which may be suitable for confinement of a battery stack, in particular for a redox flow battery. By these examples, the manufacturing costs of the flow-by electrode, the bipolar plate and/or the endplate can be reduced. The flow-by electrode unit of some embodiments can be substantially impermeable to electrolyte. Additionally or alternatively, the flow-by electrode unit may be substantially non-porous.

The open flux surface structure 54 according to embodiments of the invention may define an electrolyte flow direction (see arrows in Figs. 4 and 5) along the flow-by electrode 50, 55. Thereby, a preferred direction of flow along the electrode is established. Moreover, the open flux surface structure 54 may include a plurality of flow channels 56, which may be formed by a plurality of surface grooves. Furthermore, the plurality of flow channels can include at least one meandering flow channel. The surface grooves may be formed within the surface of the flow-by electrode 50, 55. The surface grooves may extend along the surface of the flow-by electrode 50, 55, in particular in one or more directions along the surface. Alternatively or in addition, the open flux surface structure may include a plurality of flow barriers 60, which can protrude from the flow-by electrode 50, 55. According to examples of the flow-by electrode unit, one or more of the flow channels 56, for instance the meandering flow channel(s) 56, can be formed by one or more of the flow barriers 60. In some examples, the flow channels 56 may be formed between two or more of the flow barriers 60.

The flow channels 56 may have a width of about 1 to 5 mm, preferably 2 to 3 mm. The height of the flow channels 56 may be in the range of about 1 to 10 mm, preferably 4 to 5 mm. The flow barriers 60 may have a height of about 1 to 10 mm, preferably 4 to 5 mm. Further, the width of the flow barriers 60 may be in the range of about 1 to 5 mm, preferably 2 to 3 mm.

Moreover, in embodiments of the invention, one or more of the flow channels 56, e.g. at least one of the meandering flow channels 56, may be configured for stalling a fluid electrolyte flowing in flow direction. Further, one or more of the flow barriers 60 may be configured for stalling a fluid electrolyte flowing in flow direction. This is particularly advantageous when the flow-by electrode unit of embodiments of the invention is used in half-cells of RFBs. As mentioned above, according to the laws of diffusion, the surface related mass stream of electrolyte charge carriers through a boundary layer towards an electrode surface depends on the thickness of the boundary layer and on the concentration gradient perpendicular to the surface. The thickness of the fluid dynamical boundary layer may, however, be influenced by the flow velocity and by the stream and/or flow management within the half-cell. Therefore, stalling of the electrolyte at the flow channels, e.g. at the meandering flow channels 56, and/or at the flow barriers 60 results in high flow velocities and turbulent flow, reduces the thickness of the boundary layers, and thereby increases the diffusive transport.

According to modifications of embodiments, three or more of the flow barriers may be arranged in a pattern and/or in at least one row. In some examples, the pattern may be an offset pattern. Further, at least two of the rows may be offset. The flow barriers of at least two neighboring rows can be arranged in an alternating pattern. Moreover, at least two of the rows may be arranged vertically to the flow direction. By each of these modifications, stalling of a fluid electrolyte flowing in flow direction is promoted.

According to the invention the flow barriers have a U-shape or banana-like shape with a convex and a concave side and additionally, in a prefered embodiment, at least one protrusion on the concave and/or the convex side. More preferably, the at least one protrusion is formed on the convex and the concave side, e.g. one single protrusion on either of the concave and the convex side. Alternatively, an embodiment with one single protrusion may be envisaged, whereby the one single protrusion is preferably located on the concave side of the U shaped or banana-like shaped basic flow barrier motif. If at least two protrusions occur for the U-shaped or banana-like shaped flow barrier, they may be essentially identical in size or may be different in size. Preferably, the size of the protrusion is smaller than the arms of the basis U- or banana-like shape of the flow barrier. The size of each protrusion is typically less than 30% of the the basic U-shape or banana-like shape of the flow barrier. The length of the protrusion(s) is preferably 1 to 3 mm. The at least one protrusion is preferably oriented along the flow direction and, thereby preferably essentially perpendicular to central portion of the U-shaped or banana-like flow barrier.

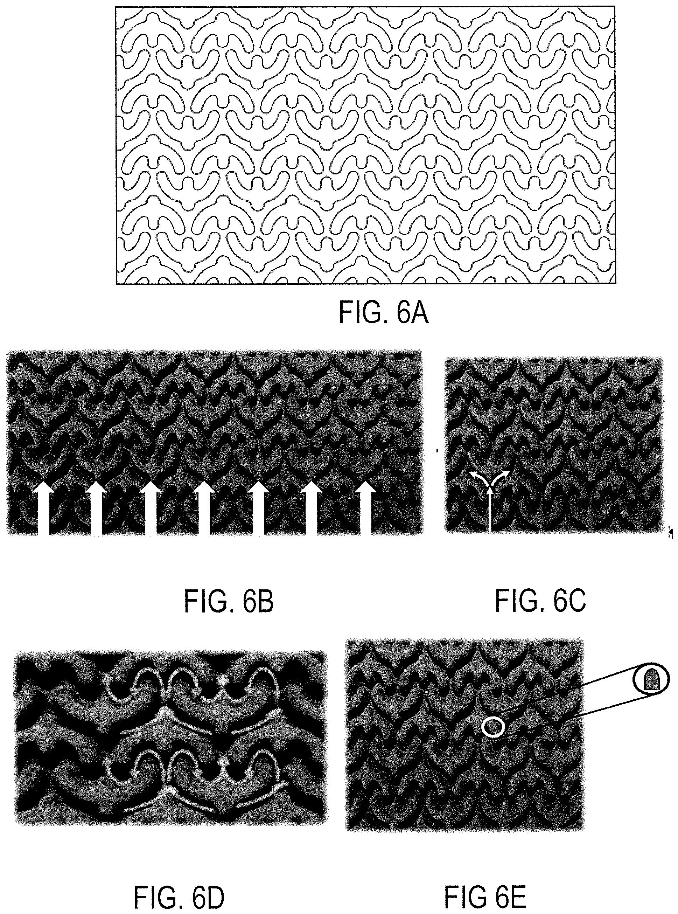

Alternatively or in addition, one or more of the flow barriers can have two lateral end parts (or portions) and a bent middle part (or portion) on which the at least one protrusion is formed. The lateral end parts (or portions) may have lengths of about 2 to 5 mm. The one or more protrusions may have lengths in a range of about 2 to 5 mm or 1 to 3 mm. The at least one protrusion are preferably shorter than the lateral end parts (or portions). At least one of the end parts (or portions) and/or at least one of the protrusions may have a tapered tip, as shown in Fig. 6. Moreover, the lateral end parts (or portions) of one or more of the flow barriers can be directed in the flow direction and/or vice versa. The rows of flow barriers may be offset and arranged in opposite to each other. I.e. as shown in Fig. 6, the lateral end parts (or portions) of the flow barriers of every second row of flow barriers may be directed in the flow direction, while the barriers of the rows between every second row are directed vice versa. Further, the bent middle part (or portion) of one or more of the flow barriers may have at least one protrusion or two protrusions preferably provided in opposite directions, the protrusion(s) being arranged in parallel to the flow direction. The protrusions act to induce turbulences and thereby enable chemical reactions in the "slipstream" of the concave side.

In redox-flow flux cells, the diffusion current determines the maximum current density and capacity. The thinner the fluid-dynamic boundary layer between the electrode and the electrolyte, the higher the diffusion current. The described surface structures advantageously help to create a thin fluid-dynamic boundary layer forming between electrode and electrolyte by enabling a faster and/or more turbulent overflow at the electrode. Fig. 6 B-E illustrates the flow of electrolyte and the turbulences caused by the structure. Thereby, stalling of a fluid electrolyte flowing in flow direction is promoted. The flow barriers, in particular the "U-shaped" flow barriers herein may further have rounded edges and profiles as shown in Fig, 6E in order to increase the active electrode surface and stabilize the membrane.

Some embodiments of the invention are configured such that the flow-by electrode 50, 55 and the substrate 52 form an integral unit. The flow-by electrode 50, 55 and the substrate 52 may be formed of a composite material, as shown in Figs. 4 and 5. Thereby, the manufacturing costs of the flow-by electrode can be reduced. Depending on the material used, the integral flow-by electrode unit may for instance be manufactured by deep drawing or by 3D printing.

The flow-by electrode 50, 55 may include at least one protection/contact layer formed on the substrate 52 (not shown in Figs. 4, 5). Moreover, the flow-by electrode 52 can include at least one electrochemically active layer formed on one or more of the protection/contact layers and/or on the substrate 52 (not shown in Figs. 4, 5). Thereby, an additional activation of the electrode is not required.

In some embodiments, the protection/contact layer has a thickness of about 2 to 500 µm, preferably 5 to 400 µm, more preferably 200 to 300 µm. The electrochemically active layer may have a thickness of about 10 to 1000 nm, preferably 20 to 500 nm. Further, the electrochemically active layer can be formed of one or more layers of particles having a particle size or particle diameter in the range of about 10 to 200 nm, preferably 20 to 100 nm. In some examples, the electrochemically active layer may be formed of about 1 to 10 layers of particles, preferably 1 to 5 layers of particles.

In above and other embodiments, one or more profiles of the at least one open flux surface structure 54 can be formed in the substrate 52, in particular in the substrate surface. In this case, the protection/contact layer and/or the electrochemically active layer may be provided on the profile of the at least one open flux surface structure 54 of the substrate 52, e.g. by molding, spray coating, dip coating, plasma spraying, thermal spraying, powder coating, kinetic metallization, CVD (Chemical Vapor Deposition), and/or PVD (Physical Vapor Deposition.

According to some examples, the protection/contact layer can be provided on the substrate surface by spray coating or dip coating, optionally followed by hardening and/or crosslinking, e.g. by tempering and/or annealing. The electrochemically active layer can for instance be applied by spray coating of particles dispersed in a solvent.

According to embodiments of the invention, the substrate 52 of the flow-by electrode may be a component separate from the at least one open flux surface structure 54. For instance, the open flux surface structure 54 and/or its profile(s) may be formed in a layer, e.g. in an outer layer, of a laminar configuration of the flow-by electrode 50, 55. The laminar configuration may include one protection/contact layer and/or one electrochemically active layer, which consist of solid materials which are attached to the substrate 52, for instance by compacting and/or attaching using a binder. The electrochemically active layer can form the outer layer of the laminar configuration. The profile(s) of the at least one open flux surface structure 54 may be formed in any of the solid protection/contact layer and the electrochemically active layer or even in both.

Further embodiments of the invention are configured, such that at least one of the substrate 52, the protection/contact layer and the electrochemically active layer can be electrically conductive.

The substrate 52 may include at least one component selected from a metal, a light metal, a transition metal, a metal alloy, alloy steel, an electrically conductive composite, a polymer, carbon, and a carbon modification. For instance, the substrate may include aluminum, graphite, and/or magnesium. For instance, the substrate 53 may include about 2 to 50 volume percent, preferably 20 to 30 volume percent, of a polymer, such as polypropylene, and about 50 to 98 volume percent, preferably 70 to 80 volume percent, of a carbon compound, such as graphite. The substrate 53 may include about 80 - 90% weight percent of a carbon compound.

The protection/contact layer can include at least one component selected from an electrically conductive polymer, electrically conductive ceramics, carbon, a carbon modification, a metal, and a binder. Examples of suitable materials include PVC (Polyvinyl Chloride), EPDM (Ethylene Propylene Diene Monomer), graphite, or a combination thereof. The protection/contact layer can include a composite formed of a binder and an electrically additive, such as a metal, a conductive ceramic and/or a carbon modification, such as graphite, carbon black, carbon nanotube (CNT), graphene, doped diamond-like carbon. The binder may be a polymer chosen from polyolefins, halogenated polymers, and/or elastomers. For instance, the material of the protection/contact layer may include about 10 to 50 volume percent, preferably 20 to 30 volume percent, of a binder, such as PVC or EPDM, and about 50 to 90 volume percent, preferably 70 to 80 volume percent, of graphite.

The electrochemically active layer can include at least one component selected from a metal, a metal compound, carbon, a carbon compound, an electrically conductive ceramic, and a binder. Preferred examples are carbon black and/or carbon nanotube (CNT). Another preferred material is selected from carbon modifications having hydroxyl, carbonyl, carboxyl or nitrogen containing (amine) groups. An example of an electrically conductive ceramic is TiN. The binder, e.g. the binder utilized for the protection/contact layer, may be used for attaching the electrochemically active layer to the underlying layer or substrate. In some examples, the electrochemically active layer may consist of pure carbon black such as acetylene black. In other examples, the electrochemically active layer includes about 2 to 50 volume percent, preferably 20 to 30 volume percent, of a binder, such as PVC, polypropylene or EPDM, and about 50 to 98 volume percent, preferably 70 to 80 volume percent, of a carbon compound, e.g. carbon black. In some preferred examples, the electrochemically active layer includes a mixture of polypropylene and carbon black.

According to preferred embodiments, the substrate 52 can include a mixture of a polymer and a carbon modification, such as polypropylene and carbon or carbon modifications such as graphite. Suitable polymers may be selected from thermoplast or duroplast polymers. Accordingly, further examples include mixtures of polyethylene and carbon or carbon modifications and polyvinylchloride and carbon or carbon modifications. In such embodiments, a protection/contact layer may be not required. For instance, the flow-by electrode 50, 55 can be formed of a substrate 52 including a mixture of about 20 to 30 volume percent polypropylene and about 70 to 80 volume percent graphite, on which an electrochemically active particle layer is applied, e.g. by kinetic coating. In other embodiments, a flow-by electrode 50, 55 can be formed of a substrate 52 including a mixture of about 30 to 40 volume percent polyvinylchloride and 60 to 70 volume percent graphite, on which an electrochemically active particle layer is applied. Such flow-by electrodes can be manufactured as described in Example 1. The electrochemically active layer may e.g. include or consist of particles of carbon black, such as acetylene black having a particle size of about 20 nm. Other suitable materials for the electrochemically active layer are disclosed elsewhere herein can include, e.g., CNT and TiN.

Due to the above mentioned material(s) of the substrate 52 included in embodiments of the flow-by electrode according to the invention, at least one of the following properties of the substrate may be implemented: the substrate can be electrically conductive, mechanical stable, and/or substantially chemically inert. For instance, the volume conductivity of the substrate may be more than 2 S/cm. The substrate 52 may include inexpensive raw materials, and can result in low costs of manufacturing. The substrate can have surface properties allowing to apply a surface coating. The substrate can be structured by shape-giving manufacturing methods, such as injection molding, thermo-forming, die-cutting, additive manufacturing, machining.

Moreover, due to the material selected, the protection/contact layer according to embodiments can be substantially non-porous and may be electrically conductive. It may be substantially chemically inert and/or mechanically stable. Moreover, the protection/contact layer can have a low electric resistance. It may be coated on the substrate, in particular on the open flux surface structure, by for instance, molding, CVD, PVD. The protection/contact layer is provided for protecting the surface and/or for promoting contact between the electrochemically active layer and the substrate surface.

The electrochemically active layer on the surface of the flow-by electrode according to embodiments of the invention is for allowing transfer of electrons from the electrode to the molecules of the electrolyte and vice versa. To this end, electrochemically active surface groups can be provided at the flow-by electrode surface, which have a low activation overvoltage for the desired reactions. Thereby, undesired anodic or cathodic side reactions can be avoided, for instance evolution of oxygen or hydrogen, which may result in a reduction of energy efficiency. Exemplary electrochemically active surface groups include oxygen containing groups such as hydroxyl, carbonyl or carbonyl moieties, or nitrogen containing groups, such as primary, secondary and tertiary amines. Attachment of the electrochemically active layer to the substrate and/or protection/contact layer(s) may be accomplished by the polymer binder mentioned above, which can also be used for the underlying layer. Alternatively, other attachment technologies may be used, which allow for a mechanical anchoring and/or electrical contacting of the electrochemically active material to the underlying protection/contact layer or directly to the substrate. An example for such technologies is kinetic coating, e.g. kinetic spray coating and/or kinetic powder coating.

The components and materials according to embodiments of the flow-by electrode allow for reducing the loss due to activation overvoltage mentioned above and thereby for improving the energy efficiency of an RFB in which a corresponding flow-by electrode is utilized.

Therefore and due to other advantages mentioned herein, one embodiment of the invention relates to a use of a flow-by electrode unit according to any of above embodiments in an energy storage and/or supply device, in particular in a redox flow battery, for instance as described below. Moreover, in a further embodiment, the flow-by electrode unit of any of above embodiments is used for storing and/or supplying energy, in particular electrical and/or electrochemical energy.

In one embodiment, a method of manufacturing a flow-by electrode unit according to above embodiments is provided, the method including forming an electrode body including a substrate and at least one open flux surface structure. The electrode body may be formed by providing the substrate and the at least one open flux surface structure in or upon the substrate surface as described above relating to embodiments of the flow-by electrode. The electrochemically active layer mentioned above can be applied on the at least one open flux surface structure. Optionally, the protection/contact layer described above may be coated on the at least one open flux surface structure before the electrochemically active layer is applied.

According to another embodiment, a redox flow battery system is provided, including: at least two cells each including a negative half-cell and a positive half-cell separated by a membrane; a first half-cell group formed by at least two of the negative half-cells which are fluidly combined by a first electrolyte ducting fluidly connected to a negative half-cell electrolyte reservoir; a second half-cell group formed by at least two of the positive half-cells which are fluidly combined by a second electrolyte ducting fluidly connected to a positive half-cell electrolyte reservoir; wherein at least one or each of the half-cells includes a flow-by electrode unit according to any embodiment of the invention.

The redox flow battery system according to above embodiment allows fluidly connecting the positive half-cells of a RFB at least partially in series and/or fluidly connecting the negative half-cells of a RFB at least partially in series. This provides a more homogeneous flow of the electrolyte at a higher flow velocity through the cells.

For instance, according to embodiments of the redox flow battery system, within one or more of the first and third half-cell groups two or more of the fluidly combined negative half-cells can be serially combined with each other. Alternatively or in addition, within one or more of the second and fourth half-cell groups two or more of the fluidly combined positive half-cells can be serially combined with each other. This configuration is advantageous for embodiments in which relatively small sized half-cells including small flow-by electrodes are provided, such as half-cells including flow-by electrodes having an electrochemically active surface below 100 x 100 cm². In such cases, the serial connection of corresponding half-cells allows for a high flow velocity of the electrolyte through the relatively small half-cells.

According to alternative embodiments, within the individual half-cell groups two or more of the fluidly combined negative half-cells can be combined in parallel with each other and/or two or more of the fluidly combined positive half-cells can be combined in parallel with each other. In this configuration large half-cells may be utilized.

In some examples of embodiments of the redox flow battery system, the cells may be separated by conductive intercell separators. Moreover, the cells may be confined by one or more endplates. For instance, the cells may form a stack in which the cells are separated by conductive intercell separators, and/or the stack may be confined by two endplates. In such embodiments, the flow-by electrode unit can be included in one or more of the conductive intercell separators. According to some examples, the flow-by electrode unit can be included in one or more of the endplates. In a further modification, at least one more cell, e.g. a cell including the flow-by electrode unit according to embodiments of the invention, can be combined and fluidly connected in parallel with the cells. Moreover, the cells of the redox flow battery system may be combined in electrical series.

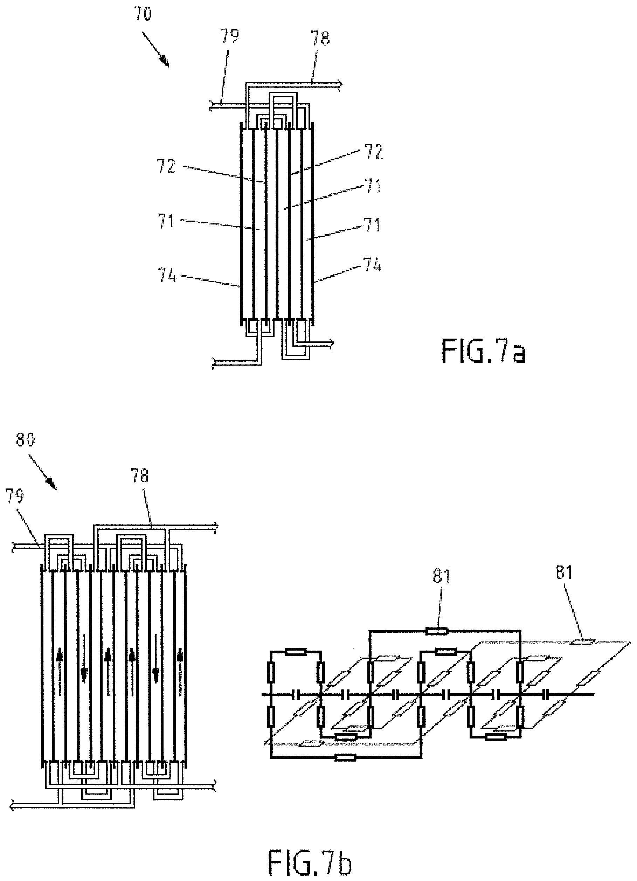

Fig. 7a schematically illustrates an example of an embodiment of a redox flow battery system including three cells 71; the electrolyte reservoirs are not shown. In this example the cells 71 form a stack 70 in which the cells are separated by conductive intercell separators 72, and wherein the stack is confined by two endplates 74. The negative half-cells of the first half-cell group are serially combined by a first electrolyte ducting 78. Within the second half-cell group at least two of the positive half-cells are serially combined by a second electrolyte ducting 79. At least one of the half-cells includes a flow-by electrode unit 50, 55 of embodiments of the invention. For instance, the flow-by electrode 55 of the embodiment shown in Fig. 5 may be mounted forming one or more of the intercell separators 72. Alternatively or in addition, one or two of the flow-by electrodes 50 of the embodiment shown in Fig. 4 can be incorporated forming one or both of the endplates 74.

The redox flow battery system of any embodiment may be modified, such that it further includes a third half-cell group formed by at least two other of the negative half-cells, the at least two other negative half-cells being fluidly combined by a third electrolyte ducting fluidly connected to the negative half-cell electrolyte reservoir, and a fourth half-cell group formed by at least two other of the positive half-cells, the at least two other positive half-cells being fluidly combined by a fourth electrolyte ducting fluidly connected to the positive half-cell electrolyte reservoir. Therein at least one or each of the other half-cells may include a flow-by electrode unit according to any of the embodiments described herein. The first and third half-cell groups are combined in parallel by the first and third electrolyte ductings, and the second and fourth half-cell groups are combined in parallel by the second and fourth electrolyte ductings. According to one further modification, the first and third electrolyte ductings may be fluidly connected, and/or the third and fourth electrolyte ductings may be fluidly connected.

Fig. 7b schematically illustrates an example of above modified embodiment of a redox flow battery system and its equivalent network diagram of resistances, in which four individual half-cell groups are formed by serially combining corresponding half-cells with each other. This example includes a stack 80 of six cells 71, the electrolyte reservoirs are not shown. At least one of the half-cells includes a flow-by electrode unit 50, 55 of embodiments of the invention.

As illustrated in Fig. 7b, due to the fact that the electrolyte is supplied in series within one or more groups of corresponding individual half-cells, the configuration of the RFB according of embodiments of the invention requires a smaller number of hydraulic and/or fluid connections between the respective half-cells as compared to a prior art redox flow battery. In particular, the ductings 78, 79 forming the hydraulic/fluid connections include a smaller number of shunts 81 which are equivalent to electrical resistances. The electrical resistances represent corresponding conductance values of the electrolyte contained in the shunts 81. For instance, in the example of Fig. 7b twelve shunts 81 are present, whereas the prior art example of Fig. 2b requires twenty shunts 41.

According to embodiments of the redox flow battery system, the cell stack may include 2 to 120 cells, preferably 50 to 100 cells.

By the redox flow battery system of embodiments of the invention, electrolyte is flown more homogeneously through the half-cells of the RFB, e.g. through a stack of cells. In addition, losses, such as losses due to activation overvoltage, ohmic losses and losses due to transport limitation are reduced. In particular, losses resulting from the total resistance of the electrolyte flowing through the system, are reduced by a reduced number of shunts. In addition, the reduced number of shunts results in a reduced electrolyte flow-related degradation of the electrode materials. Moreover, the performance of the RFB system according to embodiments is extremely efficient due to a reduction of hydraulic losses during electrolyte flow.

The flow-by electrode unit of any embodiment of the invention may be included in one or more of the conductive intercell separators and/or in one or more of the endplates of examples of the RFB system according to embodiments of the invention. According to other examples, the membrane can be ion-selectively permeable. Moreover, the first to fourth electrolyte ductings may include one or more fluid pumping means.

According to some examples of the redox flow battery system, the at least two cells may form a stack in which the cells are separated by conductive intercell separators, and/or wherein the stack can be confined by two endplates. In these examples, the flow-by electrode unit according to any embodiment mentioned herein can be included in one or more of the conductive intercell separators and/or in one or more of the endplates of the redox flow battery system. Thereby, the structure of the redox flow battery system is simplified.

Another embodiment of the invention is directed to a use of the redox flow battery system of any embodiment of the invention for storing and/or supplying energy, in particular electrical and/or electrochemical energy. Thereby, due to the advantages mentioned herein, storing and/or supplying energy can be performed in a particularly efficient way.

A yet further embodiment of the invention provides a method of operating a redox flow battery system according to any embodiment described herein, including flowing a negative half-cell electrolyte via a first electrolyte ducting from a negative half-cell electrolyte reservoir through a first half-cell group of fluidly combined negative half-cells and back to the negative half-cell electrolyte reservoir; and flowing a positive half-cell electrolyte via a second electrolyte ducting from a positive half-cell electrolyte reservoir through a second half-cell group of fluidly combined positive half-cells and back to the positive half-cell electrolyte reservoir; wherein the negative half-cell electrolyte is a fluid and includes reversibly reducible and oxidizable chemical species of a first redox couple, and the positive half-cell electrolyte is a fluid and includes reversibly reducible and oxidizable chemical species of a second redox couple. The chemical species can include ions and/or molecules, e.g. charged molecules, of the respective redox couple. In some examples, the second redox couple may be different from the first redox couple, in particular there can be a difference in redox potential between the two redox couples. This embodiment is performed using a redox flow battery system of embodiments of the invention, e.g. including a stack as shown in Fig. 7a.

In the method of embodiments, the electrolytes may be flown in an equicurrent mode through the half-cells forming the individual cells of the redox flow battery system. Thereby, the pressure difference at the membrane can be advantageously minimized.

According to a modification of embodiments of the method, the following additional steps can be included: flowing the negative half-cell electrolyte via a third electrolyte ducting from the negative half-cell electrolyte reservoir through a third half-cell group of fluidly combined negative half-cells and back to the negative half-cell electrolyte reservoir; and flowing the positive half-cell electrolyte via a fourth electrolyte ducting from the positive half-cell electrolyte reservoir through a fourth half-cell group of fluidly combined positive half-cells and back to the positive half-cell electrolyte reservoir; wherein the negative half-cell electrolyte is flown in parallel into the first and third half-cell groups; and the positive half-cell electrolyte is flown in parallel into the second and fourth half-cell groups. This embodiment is performed using a redox flow battery system of embodiments of the invention, e.g. having a stack as shown in Fig. 7b. Furthermore, the negative half-cell electrolyte may be flown in parallel from or out of the first and third half-cell groups. Moreover, the positive half-cell electrolyte can be flown in parallel from or out of the second and fourth half-cell groups.

By the methods according to embodiments of the invention, the electrolyte is flown more homogeneously through the half-cells of an RFB, e.g. through a stack of cells. In addition, losses, such as losses due to activation overvoltage, ohmic losses and losses due to transport limitation are reduced. In particular, losses resulting from the total resistance of the electrolyte flowing through the system, are reduced by a reduced number of shunts. In addition, the reduced number of shunts results in a reduced electrolyte flow-related degradation of the electrode materials. Further, the method according to embodiments of the invention allows an extremely efficient performance of the RFB system, due to a reduction of hydraulic losses during electrolyte flow, i.e. due to a reduced amount of energy required for pumping the electrolyte.

The method according to embodiments is performed in a redox flow battery system according to any embodiment of the invention. In some examples of the method according to the invention, at least one of the negative half-cell electrolyte and the positive half-cell electrolyte can be flown against and/or along the flow-by electrodes of the respective half-cells. In particular, in some examples of the method, at least one half-cell of the negative half-cells and/or of the positive half-cells can include a flow-by electrode according to embodiments of the invention.

### Example 1: Manufacturing of a flow-by electrode with a PVC graphite substrate

Graphite powder was dispersed in a PVC solution (U-PVC in THF / cyclohexanone / butanone mixture). This dispersion was sprayed onto the substrate and dried as described in Example 3 for metal substrates. The drying was accomplished by solvent evaporation at room temperature. After drying, the solid was scraped from the metal substrate and crushed with a rotating knife. The compound was sieved and ready for electrode production.

For preparing the electrochemically active layer, the compound was mixed with the active material carbon black (12 weight percent).

The substrate was pre-pressed in a pressing tool (2 t at room temperature, 10 s). Subsequently, the active layer was placed on the substrate and the electrode was pressed (6 t at 140 - 150 ° C, 2 min).

With a suitable punch or calendar a roughness and a structure can be applied to the electrode. The roughness should increase the active surface and the structure should increase the turbulence in the flow cell and stabilize the membrane.

Alternatively, the structure may be cut into the surface, or the active layer can be added to sieved (300 425 µm) common salt or a water-soluble polymer (e.g. polyvinylalcohol). After pressing, the electrode can be washed in distilled water for at least 16 h.

### Example 2: Comparison between structured and unstructured flow-by electrode surfaces

A flow-by electrode was manufactured as described in Example 1. The structure (shown in Figure 6) was cut into the substrate (depth ca. 0.5 mm) and the active layer was sprayed as a carbon black dispersion onto the structured substrate. A flow-by electrode without a structured surface served as a reference. Both electrodes were introduced into flow-by cells operated at identical flow rates with the same electrolytes. The flow-cell comprising the electrode with the structured surface exhibited a 5x increased diffusion current and a 3.5x increased capacity.

### Example 3

A substrate was manufactured by deep drawing a NiCrMo stainless steel sheet (W.Nr. 1.4401; AISI: 316) having a thickness of 0.8 mm. Thereby, a profiled rectangular plate of a length of 81 cm and a width of 60 cm was produced having on one side an open flux surface structure with geometric dimensions of 79 x 58 cm². The open flux surface structure consisted of flow channels of a width of 3 mm positioned between flow barriers of a height of about 5 mm and a thickness of 3 mm, as shown in Fig. 6. The substrate was cleaned by anodic treatment in 5M H₂SO₄, rinsing in acetone and air drying.

For forming a protection/contact layer, a mixture containing 80 vol% (volume percent) graphite and 20 vol% PVC was applied to the substrate. This was accomplished by spray coating a homogenized mixture of graphite, PVC, and a cyclohexanone/butanone solvent using a Minijet 4400 B RP spray pistol of SATA. For obtaining 150 ml of the homogenized mixture to be sprayed, 160 g Graphit FP 99.5 of Graphit Kropfmühl, 123.5 ml PVC-U Express of Tangit, and 307 ml of a 1:2 solvent mixture of cyclohexanone and butanone were agitated for one hour.

In a first step, the protection/contact layer mixture was sprayed onto the substrate at a distance of 10 to 15 cm from the substrate, at a spray pressure of 0.5 bar, and using a periodic offset speed of 6 cm/s, and dried. After drying, in a second step the procedure of the first step was repeated. Then, in a third step the first step was again repeated, however, the spraying of the mixture was performed at a distance of 30 cm from the substrate and at a periodic offset speed of 30 cm/s. The thickness of the resulting protection/contact layer was in a range of 250 to 300 µm, measured using a thickness gauge BB 25 ofTrotec.

Then, an electrochemically active layer of about 3 layers of pure carbon black particles having a particle size of 20 nm was applied by spray coating, using a HVLP mini 2550 spray pistol of Pro-Tek. The mixture to be sprayed consisted of 0.5 g Carbon Black of Graphene Supermarket and 25 ml of a solvent mixture of 45 vol% butanone and 55 vol% acetone, homogenized in a D-9 homogenizer of Miccra for three minutes at 21000 rpm. The mixture was sprayed onto the protection/contact layer of the substrate at a distance of 30 cm from the substrate, at a spray pressure of 2.5 bar, while the substrate was periodically moved, rotated and slightly tilted with respect to the spray axis.

After drying for 2 days at 25°C, the flow-by electrode was finished. Due to the materials used and due to the manufacturing method, the flow-by electrode was produced at costs amounting 20 % of the manufacturing costs of prior art flow-through electrodes. Moreover, the flow-by electrode had a high mechanical stability. In addition, the flow-by electrode with an electrochemically active length of 79 cm was longer that typical prior art flow-through electrodes having lengths of about 50 cm.

Six flow-by electrodes were produced as presented above and installed in a stack of three cells of an RFB as described above with respect to Fig. 7a. The stack was confined by endplates, the cells of the stack were separated by bipolar plates. In each cell two half-cells of a size of 81 × 60 cm² were combined, separated by a Nafion^{®} membrane, the half-cells each containing one of the flow-by electrodes. The flow-by electrodes were connected to the respective bipolar plates or to the respective endplates by electrical contacts.

A vanadium redox flow battery was operated using the above stack wherein the electrolytes included V(II)/V(III) and V(IV)/V(V) redox couples, respectively. About 200 l/min electrolyte was supplied at a pressure of 1 bar to the individual half-cells. Thus, as compared to the prior art including flow-through electrodes operated at several bars, less hydraulic energy was required and the efficiency of the system was increased. Moreover, the flow-by electrode allowed an electrolyte flow velocity of more than 50 mm/s, whereas within cells of known RFBs utilizing flow-through (FT) electrodes, the flow velocity is in a range of less than 10 mm/s. Therefore, due to its open flux surface structure, the flow-by electrode can be operated at higher flow velocities. Moreover, as compared to the prior art flow-through electrodes, flow-by electrodes having an increased length can be utilized.

### Conclusion

The flow-by electrode unit of embodiments of the invention allows an optimized mass transport within an electrolyte flowing along the electrode surface, thereby promoting the performance of e.g. an RFB in which the flow-by electrode is utilized. This is particularly due to a reduction of the laminar boundary layers of the electrolyte at the electrode surface, in which diffusive mass transport prevails. Laminar boundary layers are reduced by optimized flow management and/or flow control due to the specific surface structure of the flow-by electrode. The flow-by electrode unit of embodiments allows directing an electrolyte flow having a high flow velocity against and along the surface of the flow-by electrode, without affecting the electrode surface, but further reducing laminar boundary layers. Thus, by the flow-by electrode unit according to embodiments of the invention convective mass transport is promoted and the effect of transport limitation is reduced. The flow-by electrode unit according to embodiments of the invention allows an electrolyte flow velocity in a range of about 50 to 100 mm/s, whereas within cells of known RFBs utilizing flow-through (FT) electrodes, the flow velocity is in a range of less than 10 mm/s.

The required electrolyte volume flown through the cell of e.g. an RFB is determined by the transport limitation as a result of the diffusion liming current. Therefore, at flow-by electrodes typically a relatively high flow velocity is desired. However, the flow resistance at surfaces of flow-by electrodes is smaller by several orders of magnitude as compared to surfaces of flow-through (FT) electrodes. A higher volume flow per cell of an RFB results in a higher volume flow within the whole cell combination, e.g. a cell stack, leading to a higher power requirement for pumping and thereby reducing system efficiency. Therefore, by the redox-flow battery system and by the method according to embodiments of the invention, a plurality of cells, i.e. a plurality of corresponding half-cells, can be fluidly connected in series, instead of being connected in parallel as is typically done using FT electrodes.

Within a RFB, due to the desired maximum utilization of electrolyte, the number of cells, i.e. the number of half-cells which can be connected in series may be reduced. Therefore, the redox-flow battery system and the method according to some embodiments of the invention may include/utilize separate groups of half-cells fluidly connected in series, the electrolyte being supplied in parallel to the separate groups. Within this configuration, the volume flow for the whole cell combination is comparable to the volume flow of a cell combination in which all cells, i.e. the corresponding half-cells, are fluidly connected in parallel. The flow resistances of the cells which are fluidly connected in series add to a total flow resistance which is, however, decisively smaller than the total flow resistance of cells which are connected in parallel. Thereby, less hydraulic energy is required and the efficiency of the system is increased.

In addition, by the redox flow battery system and by the method according to embodiments of the invention, the electrolyte is flown more homogeneously through the half-cells of the RFB, e.g. through a stack of cells. In addition, losses, such as losses due to activation overvoltage, ohmic losses and losses due to transport limitation are reduced. In particular, losses resulting from the total resistance of the electrolyte flowing through the system can be minimized by a reduced number of shunts by fluidly connecting some half-cells in series. In addition, the reduced number of shunts results in a reduced electrolyte flow-related degradation of the electrode materials. Further, the method according to embodiments of the invention allows an extremely efficient performance of an RFB, due to a reduction of hydraulic losses during electrolyte flow.

The flow-by electrode unit according to embodiments has at least one open flux surface structure against and/or along which electrolyte can be flown. In some embodiments of the flow-by electrode unit according to the invention, the electrode and the bipolar plate or endplate can form an integral unit and/or are formed of a composite material. These or other embodiments of the flow-by electrode can be manufactured at low costs. The flow-by electrode unit of any embodiment according to the invention can have a reliable electrical contact to conductors, such as bipolar plate and endplate, and may ensure low ohmic losses during operation e.g. in an RFB. Moreover, the flow-by electrode unit of embodiments may have a high mechanical stability. Further, some embodiments show a high electrochemical activity of the surface, such that an additional activation is not necessary. The flow-by electrode of embodiments allows a homogeneous flow at its surface and/or within a cell of a battery, e.g. an RFB, such that high flow velocities can be achieved. The flow resistance at the open flux surface structures can be low. Thus, the flow-by electrode according to embodiments of the invention can be formed having an increased length as compared to prior art flow-through electrodes and may be utilized in a large sized battery cell, e.g. of an RFB, allowing an improved energy efficiency. According to a redox flow battery system and a method of embodiments of the invention, a plurality of half-cells provided in an RFB can be fluidly connected in series. Thereby, the number of shunts required in hydraulic/fluid connections between the half-cells can be small.

While the foregoing is directed to embodiments and examples of the invention, other and further embodiments of the invention may be devised. Especially, mutually non-exclusive features of the embodiments and examples described above may be combined with each other.

### List of Reference Signs

10 cell
12 half-cell
14 half-cell
16 electrode
18 electrode
20 membrane
22 ducting
24 ducting
26 pump
28 pump
30 tank
32 tank
40 battery stack
41 shunt
42 bipolar plate
44 endplate
45 combination of FT electrodes
46 electrode
48 electrode
50 flow-by electrode
52 substrate
54 open flux surface structure
55 flow-by electrode
56 flow channel
60 flow barrier
70 stack
71 cell
72 intercell separator
74 endplate
78 electrolyte ducting
79 electrolyte ducting
80 stack
81 shunt

## Claims

1. A flow-by electrode unit for a redox flow battery, comprising a flow-by electrode (50; 55) including a substrate (52) and having at least one surface structure (54) including a plurality of flow barriers (60) and a plurality of flow channels (56) formed by or between said flow barriers (60),
wherein one or more of the flow barriers (60) has/have a U-shape or banana-like shape.

2. The unit according to claim 1, wherein one or more of the flow barriers (60) has two lateral end parts and a bent middle part on which at least one protrusion is formed.

3. The unit according to claim 2, wherein at least one of the end parts and/or at least one of the protusions has a tapered tip.

4. The unit according to any of the preceding claims, wherein said flow barriers (60) are arranged in a pattern.

5. The unit according to claim 4, wherein said pattern includes at least one row of flow barriers (60).

6. The unit according to any one of the preceding claims, wherein said pattern is an offset pattern.

7. The unit according to any one of claims 4 to 6, wherein at least two of the rows are arranged vertically to the flow direction.

8. The unit according to any one of claims 4 to 7, wherein the flow barriers (60) of at least two neighboring rows are arranged in an alternating pattern.

9. The unit according to any one of claims 4 to 8, wherein the lateral end parts of one or more of the flow barriers (60) are directed in the flow direction and/or vice versa.

10. The unit according to claim 2 and any one of claims 3 to 9, as far as being dependent on claim 2, wherein the bent middle part of one or more of the flow barriers (60) has at least one protrusion or two protrusions provided in opposite directions, the protrusion(s) being arranged in parallel to the flow direction.

11. The unit according to any one of the preceding claims, wherein the plurality of flow channels includes at least one meandering flow channel (56).

12. The unit according to any one of the preceding claims, wherein the open flux surface structure (54) defines an electrolyte flow direction along the flow-by electrode.

13. The unit according to any one of the preceding claims, wherein the substrate (52) is positioned between two surface structures (54) as defined in claim 1 to 12.

14. The unit according to any one of the preceding claims, wherein the at least one open flux surface structure (54) is electrochemically active.

15. The unit according to any of the preceding claims, wherein at least one of the flow-by electrode unit and the substrate (52) includes or is a bipolar plate or an endplate.

16. The unit according to any of the preceding claims, wherein the flow-by electrode unit is substantially impermeable to electrolyte or is substantially non-porous.

17. The unit according to any of the preceding claims, wherein the flow-by electrode (50; 55) and the substrate (52) form an integral unit.

18. The unit according to any of the preceding claims, wherein the flow-by electrode (50; 55) and the substrate (52) are formed of a composite material.

19. The unit according to any of the preceding claims, wherein the flow-by electrode (50; 55) includes at least one protection/contact layer formed on the substrate.

20. The unit according to any of the preceding claims, wherein the flow-by electrode (50; 55) includes at least one electrochemically active layer formed on the substrate and/or on one or more of the protection/contact layer.

21. The unit according to any of the preceding claims, wherein one or more profiles of the at least one surface structure (54) is formed in the substrate and/or in at least one of the protection/contact layers and/or in at least one of the electrochemically active layers.

22. The unit according to any of the preceding claims, wherein the substrate (52), the protection/contact layer and/or the electrochemically active layer is/are electrically conductive.

23. The unit according to any of the preceding claims, wherein the substrate (52) includes at least one component selected from a metal, a light metal, a transition metal, a metal alloy, alloy steel, an electrically conductive composite, a polymer, carbon, and a carbon modification or mixtures thereof.

24. The unit according to claim 23, wherein the substrate (52) comprises a mixture of polypropylene and carbon or a carbon modification; or a mixture of polyvinylchloride and carbon or a carbon modification; or a mixture of polyethylene and carbon or a carbon modification.

25. The unit according to claim 24, wherein said carbon modification is selected from graphite.

26. The unit according to any of claims 19 to 25, wherein the protection/contact layer includes at least one component selected from an electrically conductive polymer, electrically conductive ceramics, carbon, a carbon modification, a metal, and a binder.

27. The unit according to any of claims 20 to 26, wherein the electrochemically active layer includes at least one component selected from a metal, a metal compound, carbon, a carbon compound, an electrically conductive ceramic, and a binder.

28. A use of a flow-by electrode unit according to any of the preceding claims in an energy storage and/or supply device, in particular in a redox flow battery.

29. A use of a flow-by electrode unit according to any of claims 1 to 27 for storing and/or supplying energy.

30. A method of manufacturing a flow-by electrode unit according to any of claims 1 to 27, comprising forming an electrode body including a substrate (52) and at least one surface structure (54).

31. A redox flow battery system, comprising at least two cells (71) each including a negative half-cell and a positive half-cell separated by a membrane; a first half-cell group formed by at least two of the negative half-cells which are fluidly combined by a first electrolyte ducting (78) fluidly connected to a negative half-cell electrolyte reservoir; a second half-cell group formed by at least two of the positive half-cells which are fluidly combined by a second electrolyte ducting (79) fluidly connected to a positive half-cell electrolyte reservoir; wherein at least one or each of the half-cells includes a flow-by electrode unit according to any of claims 1 to 27.

32. The redox flow battery system according to claim 31, further comprising a third half-cell group formed by at least two other of the negative half-cells, the at least two other negative half-cells being fluidly combined by a third electrolyte ducting fluidly connected to the negative half-cell electrolyte reservoir; and a fourth half-cell group formed by at least two other of the positive half-cells, the at least two other positive half-cells being fluidly combined by a fourth electrolyte ducting fluidly connected to the positive half-cell electrolyte reservoir; wherein at least one or each of the other half-cells includes a flow-by electrode unit according to any of claims 1 to 27; and wherein the first and third half-cell groups are combined in parallel by the first and third electrolyte ductings, and the second and fourth half-cell groups are combined in parallel by the second and fourth electrolyte ductings.

33. The redox flow battery system according to claim 31 or 32, wherein the cells are separated by conductive intercell separators (72), the flow-by electrode unit according to any of claims 1 to 28 being included in one or more of the conductive intercell separators.

34. The redox flow battery system according to any of claims 31 to 33, wherein the cells are confined by one or more endplates (74), the flow-by electrode unit according to any of claims 1 to 28 being included in one or more of the endplates.

35. The redox flow battery system according to any of claims 31 to 34, wherein within one or more of the first and third half-cell groups two or more of the fluidly combined negative half-cells are serially combined with each other.

36. The redox flow battery system according to any of claims 31 to 35, wherein within one or more of the second and fourth half-cell groups two or more of the fluidly combined positive half-cells are serially combined with each other.

37. A use of the redox flow battery system of any of claims 31 to 36 for storing and/or supplying energy.

38. A method of operating a redox flow battery system according to any of claims 31 to 36, comprising flowing a negative half-cell electrolyte via a first electrolyte ducting (78) from a negative half-cell electrolyte reservoir through a first half-cell group of fluidly combined negative half-cells and back to the negative half-cell electrolyte reservoir; and flowing a positive half-cell electrolyte via a second electrolyte (79) ducting from a positive half-cell electrolyte reservoir through a second half-cell group of fluidly combined positive half-cells and back to the positive half-cell electrolyte reservoir; wherein the negative half-cell electrolyte is a fluid and includes reversibly reducible and oxidizable chemical species of a first redox couple, and the positive half-cell electrolyte is a fluid and includes reversibly reducible and oxidizable chemical species of a second redox couple.

39. The method according to claim 38, the method being performed using the system of any of claims 32 to 36, the method further comprising: flowing the negative half-cell electrolyte via a third electrolyte ducting from the negative half-cell electrolyte reservoir through a third half-cell group of fluidly combined negative half-cells and back to the negative half-cell electrolyte reservoir; and flowing the positive half-cell electrolyte via a fourth electrolyte ducting from the positive half-cell electrolyte reservoir through a fourth half-cell group of fluidly combined positive half-cells and back to the positive half-cell electrolyte reservoir; wherein the negative half-cell electrolyte is flown in parallel into the first and third half-cell groups; and the positive half-cell electrolyte is flown in parallel into the second and fourth half-cell groups.

40. The method according to claim 38 or 39, wherein at least one of the negative half-cell electrolyte and the positive half-cell electrolyte are flown against and/or along the flow-by electrodes of the respective half-cells.

## Patentansprüche

1. Vorbeifluss-Elektrodeneinheit für eine Redox-Durchflussbatterie, die eine Vorbeiflusselektrode (50; 55) umfasst, die ein Substrat (52) umfasst und mindestens eine Oberflächenstruktur (54) aufweist, die eine Vielzahl von Flussbarrieren (60) und eine Vielzahl von Flusskanälen (56) umfasst, die durch oder zwischen den Flussbarrieren (60) gebildet werden,
wobei eine oder mehrere der Flussbarrieren (60) eine U-Form oder eine bananenähnliche Form hat/haben.

2. Einheit nach Anspruch 1, wobei eine oder mehrere der Flussbarrieren (60) zwei seitliche Endteile und einen gebogenen Mittelteil aufweisen, an dem mindestens ein Vorsprung ausgebildet ist.

3. Einheit nach Anspruch 2, wobei mindestens eines der Endteile und/oder mindestens einer der Vorsprünge eine verjüngte Spitze aufweist.

4. Einheit nach einem der vorhergehenden Ansprüche, wobei die Flussbarrieren (60) in einem Muster angeordnet sind.

5. Einheit nach Anspruch 4, wobei das Muster mindestens eine Reihe von Flussbarrieren (60) umfasst.

6. Einheit nach einem der vorhergehenden Ansprüche, wobei das Muster ein Offset-Muster ist.

7. Einheit nach einem der Ansprüche 4 bis 6, wobei mindestens zwei der Reihen senkrecht zur Flussrichtung angeordnet sind.

8. Einheit nach einem der Ansprüche 4 bis 7, wobei die Flussbarrieren (60) von mindestens zwei benachbarten Reihen in einem altenierenden Muster angeordnet sind.

9. Einheit nach einem der Ansprüche 4 bis 8, wobei die seitlichen Endteile einer oder mehrerer der Flussbarrieren (60) in Strömungsrichtung und/oder umgekehrt ausgerichtet sind.

10. Einheit nach Anspruch 2 und einem der Ansprüche 3 bis 9, soweit sie von Anspruch 2 abhängig ist, wobei der gebogene Mittelteil einer oder mehrerer der Flussbarrieren (60) mindestens einen Vorsprung oder zwei Vorsprünge aufweist, die in entgegengesetzten Richtungen vorgesehen sind, wobei der Vorsprung oder die Vorsprünge parallel zur Flussrichtung angeordnet sind.

11. Einheit nach einem der vorhergehenden Ansprüche, wobei die Vielzahl der Flusskanäle mindestens einen mäanderförmigen Flusskanal (56) umfasst.

12. Einheit nach einem der vorhergehenden Ansprüche, wobei die offene Flussoberflächenstruktur (54) eine Elektrolytströmungsrichtung entlang der Vorbeiflusselektrode definiert.

13. Einheit nach einem der vorhergehenden Ansprüche, wobei das Substrat (52) zwischen zwei Oberflächenstrukturen (54), wie in einem der Ansprüche 1 bis 12 definiert, angeordnet ist.

14. Einheit nach einem der vorhergehenden Ansprüche, wobei die mindestens eine offene Flussoberflächenstruktur (54) elektrochemisch aktiv ist.

15. Einheit nach einem der vorhergehenden Ansprüche, wobei mindestens eines von Vorbeifluss-Elektrodeneinheit und Substrat (52) eine bipolare Platte oder eine Endplatte umfasst oder eine solche ist.

16. Einheit nach einem der vorhergehenden Ansprüche, wobei die Vorbeifluss-Elektrodeneinheit im Wesentlichen undurchlässig für Elektrolyt oder im Wesentlichen nicht porös ist.

17. Einheit nach einem der vorhergehenden Ansprüche, wobei die Vorbeiflusselektrode (50; 55) und das Substrat (52) eine integrale Einheit bilden.

18. Einheit nach einem der vorhergehenden Ansprüche, wobei die Vorbeiflusselektrode (50; 55) und das Substrat (52) aus einem Verbundwerkstoff bestehen.

19. Einheit nach einem der vorhergehenden Ansprüche, wobei die Vorbeiflusselektrode (50; 55) mindestens eine auf dem Substrat ausgebildete Schutz-/Kontaktschicht aufweist.

20. Einheit nach einem der vorhergehenden Ansprüche, wobei die Vorbeiflusselektrode (50; 55) mindestens eine elektrochemisch aktive Schicht aufweist, die auf dem Substrat und/oder auf einer oder mehreren der Schutz-/Kontaktschicht(en) ausgebildet ist.

21. Einheit nach einem der vorhergehenden Ansprüche, wobei ein oder mehrere Profil(e) der mindestens einen Oberflächenstruktur (54) in dem Substrat und/oder in mindestens einer der Schutz-/Kontaktschichten und/oder in mindestens einer der elektrochemisch aktiven Schichten ausgebildet ist/sind.

22. Einheit nach einem der vorhergehenden Ansprüche, wobei das Substrat (52), die Schutz-/Kontaktschicht und/oder die elektrochemisch aktive Schicht elektrisch leitfähig ist/sind.

23. Einheit nach einem der vorhergehenden Ansprüche, wobei das Substrat (52) mindestens eine Komponente umfasst, die aus einem Metall, einem Leichtmetall, einem Übergangsmetall, einer Metalllegierung, legiertem Stahl, einem elektrisch leitfähigen Verbundstoff, einem Polymer, Kohlenstoff und einer Kohlenstoffmodifikation oder Mischungen davon ausgewählt ist.

24. Einheit nach Anspruch 23, wobei das Substrat (52) ein Gemisch aus Polypropylen und Kohlenstoff oder einer Kohlenstoffmodifikation; oder ein Gemisch aus Polyvinylchlorid und Kohlenstoff oder einer Kohlenstoffmodifikation; oder ein Gemisch aus Polyethylen und Kohlenstoff oder einer Kohlenstoffmodifikation umfasst.

25. Einheit nach Anspruch 24, wobei die Kohlenstoffmodifikation aus Graphit ausgewählt ist.

26. Einheit nach einem der Ansprüche 19 bis 25, wobei die Schutz-/Kontaktschicht mindestens eine Komponente umfasst, die aus einem elektrisch leitfähigen Polymer, elektrisch leitfähiger Keramik, Kohlenstoff, einer Kohlenstoffmodifikation, einem Metall und einem Bindemittel ausgewählt ist.

27. Einheit nach einem der Ansprüche 20 bis 26, wobei die elektrochemisch aktive Schicht mindestens eine Komponente umfasst, die aus einem Metall, einer Metallverbindung, Kohlenstoff, einer Kohlenstoffverbindung, einer elektrisch leitenden Keramik und einem Bindemittel ausgewählt ist.

28. Verwendung einer Vorbeifluss-Elektrodeneinheit nach einem der vorhergehenden Ansprüche in einer Energiespeicher- und/oder Energieversorgungseinrichtung, insbesondere in einer Redox-Flow-Batterie.

29. Verwendung einer Vorbeifluss-Elektrodeneinheit nach einem der Ansprüche 1 bis 27 zur Speicherung und/oder Bereitstellung von Energie.

30. Ein Verfahren zur Herstellung einer Vorbeifluss-Elektrodeneinheit nach einem der Ansprüche 1 bis 27, das die Bildung eines Elektrodenkörpers mit einem Substrat (52) und mindestens einer Oberflächenstruktur (54) umfasst.

31. Ein Redox-Fluss-Batteriesystem, das mindestens zwei Zellen (71) umfasst, die jeweils eine negative Halbzelle und eine positive Halbzelle, die durch eine Membran getrennt sind, umfassen; weiter umfassend eine erste Halbzell-Gruppe, die durch mindestens zwei der negativen Halbzellen gebildet wird, die durch eine erste Elektrolytleitung (78), die mit einem Elektrolytreservoir einer negativen Halbzelle fluidisch verbunden ist, in Fluidverbindung gebracht werden; weiter umfassend eine zweite Halbzell-Gruppe, die durch mindestens zwei der positiven Halbzellen gebildet wird, die durch eine zweite Elektrolytleitung (79), die mit einem Elektrolytreservoir der positiven Halbzelle in Fluidverbindung steht, miteinander verbunden sind; wobei mindestens eine oder jede der Halbzellen eine Vorbeifluss-Elektrodeneinheit nach einem der Ansprüche 1 bis 27 umfasst.

32. Redox-Fluss-Batteriesystem nach Anspruch 31, ferner umfassend eine dritte Halbzell-Gruppe, die durch mindestens zwei andere der negativen Halbzellen gebildet wird, wobei die mindestens zwei anderen negativen Halbzellen durch eine dritte Elektrolytleitung, die mit dem Elektrolytreservoir der negativen Halbzelle fluidisch verbunden ist, in Fluidverbindung gebracht werden; und umfassend eine vierte Halbzell-Gruppe, die durch mindestens zwei andere der positiven Halbzellen gebildet wird, wobei die mindestens zwei anderen positiven Halbzellen durch eine vierte Elektrolytleitung, die mit dem Elektrolytreservoir der positiven Halbzelle fluidisch verbunden ist, in Fluidverbindung gebracht werden; wobei mindestens eine oder jede der anderen Halbzellen eine Vorbeifluss-Elektrodeneinheit nach einem der Ansprüche 1 bis 27 umfasst; und wobei die erste und die dritte Halbzell-Gruppen durch die erste und die dritte Elektrolytleitungen parallel kombiniert sind und die zweite und die vierte Halbzell-Gruppen durch die zweite und die vierte Elektrolytleitungen parallel kombiniert sind.

33. Redox-Fluss-Batteriesystem nach Anspruch 31 oder 32, bei dem die Zellen durch leitende Interzell-Separatoren (72) getrennt sind, wobei die Vorbeifluss-Elektrodeneinheit nach einem der Ansprüche 1 bis 28 in einem oder mehreren der leitenden Interzell-Separator(en) enthalten ist.

34. Redox-Fluss-Batteriesystem nach einem der Ansprüche 31 bis 33, bei dem die Zellen durch eine oder mehrere Endplatten (74) eingeschlossen sind, wobei die Vorbeifluss-Elektrodeneinheit nach einem der Ansprüche 1 bis 28 in einer oder mehreren der Endplatten enthalten ist.

35. Redox-Fluss-Batteriesystem nach einem der Ansprüche 31 bis 34, wobei innerhalb einer oder mehrerer der ersten und dritten Halbzell-Gruppen zwei oder mehrere der fluidisch verbundenen negativen Halbzellen seriell miteinander verbunden sind.

36. Redox-Fluss-Batteriesystem nach einem der Ansprüche 31 bis 35, wobei innerhalb einer oder mehrerer der zweiten und vierten Halbzell-Gruppen zwei oder mehrere der fluidisch kombinierten positiven Halbzellen seriell miteinander verbunden sind.

37. Verwendung des Redox-Fluss-Batteriesystems nach einem der Ansprüche 31 bis 36 zur Speicherung und/oder Bereitstellung von Energie.

38. Ein Verfahren zum Betreiben eines Redox-Fluss-Batteriesystems nach einem der Ansprüche 31 bis 36, das umfasst: Fließenlassen eines negativen Halbzell-Elektrolyten über eine erste Elektrolytleitung (78) von einem Elektrolytreservoir einer negativen Halbzelle durch eine erste Halbzell-Gruppe von fluidisch kombinierten negativen Halbzellen und zurück zu dem Elektrolytreservoir der negativen Halbzelle; und Fließenlassen eines Elektrolyten einer positiven Halbzelle über eine zweite Elektrolytleitung (79) von einem Elektrolytreservoir einer positiven Halbzelle durch eine zweite Halbzell-Gruppe von fluidisch kombinierten positiven Halbzellen und zurück zu dem Elektrolytreservoir einer positiven Halbzelle; wobei der Elektrolyt der negativen Halbzelle ein Fluid ist und reversibel reduzierbare und oxidierbare chemische Spezies eines ersten Redoxpaares enthält, und der Elektrolyt der positiven Halbzelle ein Fluid ist und reversibel reduzierbare und oxidierbare chemische Spezies eines zweiten Redoxpaares enthält.

39. Verfahren nach Anspruch 38, wobei das Verfahren unter Verwendung des Systems nach einem der Ansprüche 32 bis 36 durchgeführt wird, wobei das Verfahren ferner umfasst:
Fließenlassen des negativen Halbzell-Elektrolyts über eine dritte Elektrolytleitung von dem negativen Halbzell-Elektrolytreservoir durch eine dritte Halbzell-Gruppe von fluidisch kombinierten negativen Halbzellen und zurück zu dem negativen Halbzell-Elektrolytreservoir; und
Fließenlassen des positiven Halbzell-Elektrolyten über eine vierte Elektrolytleitung von dem positiven Halbzell-Elektrolytreservoir durch eine vierte Halbzell-Gruppe von fluidisch kombinierten positiven Halbzellen und zurück zu dem positiven Halbzell-Elektrolytreservoir;
wobei der negative Halbzell-Elektrolyt parallel in die erste und dritte Halbzell-Gruppe fließt; und der positive Halbzell-Elektrolyt parallel in die zweite und vierte Halbzell-Gruppe fließt.

40. Verfahren nach Anspruch 38 oder 39, wobei der negative Halbzell-Elektrolyt und/oder der positive Halbzell-Elektrolyt gegen und/oder entlang der Vorbeiflusselektroden der jeweiligen Halbzellen geströmt werden.

## Revendications

1. Unité d'électrode à flux pour une batterie à flux redox, comprenant une électrode à flux (50 ; 55) comportant un substrat (52) et ayant au moins une structure de surface (54) comportant une pluralité de barrières de flux (60) et une pluralité de canaux de flux (56) formés par ou entre lesdites barrières de flux (60),
dans laquelle une ou plusieurs des barrières de flux (60) a/ont une forme en U ou une forme de banane.

2. Unité selon la revendication 1, dans laquelle une ou plusieurs des barrières de flux (60) ont deux parties d'extrémité latérales et une partie médiane courbée sur laquelle est formée au moins une saillie.

3. Unité selon la revendication 2, dans laquelle au moins une des parties d'extrémité et/ou au moins une des saillie a une pointe effilée.

4. Unité selon l'une des revendications précédentes, dans laquelle lesdites barrières de flux (60) sont agencées selon un motif.

5. Unité selon la revendication 4, dans laquelle ledit motif comporte au moins une rangée de barrières de flux (60).

6. Unité selon l'une quelconque des revendications précédentes, dans laquelle ledit motif est un motif de décalage.

7. Unité selon l'une quelconque des revendications 4 à 6, dans laquelle au moins deux des rangées sont agencées verticalement à la direction de flux.

8. Unité selon l'une quelconque des revendications 4 à 7, dans laquelle les barrières de flux (60) d'au moins deux rangées voisines sont agencées selon un motif alterné.

9. Unité selon l'une quelconque des revendications 4 à 8, dans laquelle les parties d'extrémité latérales d'une ou de plusieurs des barrières de flux (60) sont dirigées dans la direction de flux et/ou vice versa.

10. Unité selon la revendication 2 et l'une quelconque des revendications 3 à 9, dans la mesure où elle dépend de la revendication 2, dans laquelle la partie médiane courbée d'une ou de plusieurs des barrières de flux (60) a au moins une saillie ou deux saillies prévue(s) dans des directions opposées, la ou les saillie(s) étant agencée(s) parallèlement à la direction de flux.

11. Unité selon l'une quelconque des revendications précédentes, dans laquelle la pluralité de canaux de flux comporte au moins un canal de flux sinueux (56).

12. Unité selon l'une quelconque des revendications précédentes, dans laquelle la structure de surface de flux ouverte (54) définit une direction de flux d'électrolyte le long de l'électrode à flux.

13. Unité selon l'une quelconque des revendications précédentes, dans laquelle le substrat (52) est positionné entre deux structures de surface (54) telles que définies dans les revendications 1 à 12.

14. Unité selon l'une quelconque des revendications précédentes, dans laquelle l'au moins une structure de surface de flux ouverte (54) est électrochimiquement active.

15. Unité selon l'une des revendications précédentes, dans laquelle au moins l'un parmi l'unité d'électrode à flux et le substrat (52) comporte ou est une plaque bipolaire ou une plaque d'extrémité.

16. Unité selon l'une des revendications précédentes, dans laquelle l'unité d'électrode à flux est sensiblement imperméable à l'électrolyte ou est sensiblement non poreuse.

17. Unité selon l'une des revendications précédentes, dans laquelle l'électrode à flux (50 ; 55) et le substrat (52) forment une unité intégrale.

18. Unité selon l'une des revendications précédentes, dans laquelle l'électrode à flux (50 ; 55) et le substrat (52) sont formés d'un matériau composite.

19. Unité selon l'une des revendications précédentes, dans laquelle l'électrode à flux (50 ; 55) comprend au moins une couche de protection/contact formée sur le substrat.

20. Unité selon l'une des revendications précédentes, dans laquelle l'électrode à flux (50 ; 55) comporte au moins une couche électrochimiquement active formée sur le substrat et/ou sur une ou plusieurs des couches de protection/contact.

21. Unité selon l'une des revendications précédentes, dans laquelle un ou plusieurs profils de l'au moins une structure de surface (54) est formé dans le substrat et/ou dans au moins une des couches de protection/contact et/ou dans au moins une des couches électrochimiquement actives.

22. Unité selon l'une des revendications précédentes, dans laquelle le substrat (52), la couche de protection/contact et/ou la couche électrochimiquement active est/sont électriquement conducteur(s).

23. Unité selon l'une des revendications précédentes, dans laquelle le substrat (52) comporte au moins un composant choisi parmi un métal, un métal léger, un métal de transition, un alliage métallique, un acier allié, un composite électriquement conducteur, un polymère, du carbone et une modification du carbone ou des mélanges de ceux-ci.

24. Unité selon la revendication 23, dans laquelle le substrat (52) comprend un mélange de polypropylène et de carbone ou une modification de carbone ; ou un mélange de polychlorure de vinyle et de carbone ou une modification de carbone ; ou un mélange de polyéthylène et de carbone ou une modification de carbone.

25. Unité selon la revendication 24, dans laquelle ladite modification de carbone est choisie parmi le graphite.

26. Unité selon l'une des revendications 19 à 25, dans laquelle la couche de protection/contact comporte au moins un composant choisi parmi un polymère électriquement conducteur, une céramique électriquement conductrice, du carbone, une modification de carbone, un métal et un liant.

27. Unité selon l'une des revendications 20 à 26, dans laquelle la couche électrochimiquement active comporte au moins un composant choisi parmi un métal, un composé métallique, du carbone, un composé carboné, une céramique électriquement conductrice et un liant.

28. Utilisation d'une unité d'électrode à flux selon l'une des revendications précédentes dans un dispositif de stockage et/ou de fourniture d'énergie, en particulier dans une batterie à flux redox.

29. Utilisation d'une unité d'électrode à flux selon l'une des revendications 1 à 27 pour stocker et/ou fournir de l'énergie.

30. Procédé de fabrication d'une unité d'électrode à flux selon l'une des revendications 1 à 27, comprenant la formation d'un corps d'électrode comportant un substrat (52) et au moins une structure de surface (54).

31. Système de batterie à flux redox, comprenant au moins deux cellules (71) comportant chacune une demi-cellule négative et une demi-cellule positive séparées par une membrane ; un premier groupe de demi-cellules formé par au moins deux des demi-cellules négatives qui sont combinées de manière fluidique par un premier conduit d'électrolyte (78) en communication fluidique avec un réservoir d'électrolyte de demi-cellule négative ; un deuxième groupe de demi-cellules formé par au moins deux des demi-cellules positives qui sont combinées de manière fluidique par un deuxième conduit d'électrolyte (79) en communication fluidique avec un réservoir d'électrolyte de demi-cellule positive ; dans lequel au moins une ou chacune des demi-cellules comporte une unité d'électrode à flux selon l'une des revendications 1 à 27.

32. Système de batterie à flux redox selon la revendication 31, comprenant en outre un troisième groupe de demi-cellules formé par au moins deux autres des demi-cellules négatives, les au moins deux autres demi-cellules négatives étant combinées de manière fluidique par un troisième conduit d'électrolyte en communication fluidique avec le réservoir d'électrolyte de demi-cellule négative ; et un quatrième groupe de demi-cellules formé par au moins deux autres des demi-cellules positives, les au moins deux autres demi-cellules positives étant combinées de manière fluidique par un quatrième conduit d'électrolyte en communication fluidique avec le réservoir d'électrolyte de demi-cellule positive ; dans lequel au moins une ou chacune des autres demi-cellules comporte une unité d'électrode à flux selon l'une des revendications 1 à 27 ; et dans lequel les premier et troisième groupes de demi-cellules sont combinés en parallèle par les premier et troisième conduits d'électrolyte, et les deuxième et quatrième groupes de demi-cellules sont combinés en parallèle par les deuxième et quatrième conduits d'électrolyte.

33. Système de batterie à flux redox selon la revendication 31 ou 32, dans lequel les cellules sont séparées par des séparateurs intercellulaires conducteurs (72), l'unité d'électrode à flux selon l'une des revendications 1 à 28 étant incluse dans un ou plusieurs des séparateurs intercellulaires conducteurs.

34. Système de batterie à flux redox selon l'une des revendications 31 à 33, dans lequel les cellules sont confinées par une ou plusieurs plaques d'extrémité (74), l'unité d'électrode à flux selon l'une des revendications 1 à 28 étant incluse dans une ou plusieurs des plaques d'extrémité.

35. Système de batterie à flux redox selon l'une des revendications 31 à 34, dans lequel, dans un ou plusieurs des premier et troisième groupes de demi-cellules, deux demi-cellules négatives ou plus combinées de manière fluidique sont combinées en série les unes avec les autres.

36. Système de batterie à flux redox selon l'une des revendications 31 à 35, dans lequel, dans un ou plusieurs des deuxième et quatrième groupes de demi-cellules, deux demi-cellules positives ou plus combinées de manière fluidique sont combinées en série les unes avec les autres.

37. Utilisation du système de batterie à flux redox selon l'une des revendications 31 à 36 pour stocker et/ou fournir de l'énergie.

38. Procédé de fonctionnement d'un système de batterie à flux redox selon l'une des revendications 31 à 36, comprenant l'écoulement d'un électrolyte de demi-cellule négative via un premier conduit d'électrolyte (78) à partir d'un réservoir d'électrolyte de demi-cellule négative à travers un premier groupe de demi-cellules de demi-cellules négatives combinées de manière fluidique et en retour vers le réservoir d'électrolyte de demi-cellule négative ; et l'écoulement d'un électrolyte de demi-cellule positive via un deuxième conduit d'électrolyte (79) à partir d'un réservoir d'électrolyte de demi-cellule positive à travers un deuxième groupe de demi-cellules de demi-cellules positives combinées de manière fluidique et en retour vers le réservoir d'électrolyte de demi-cellule positive ; dans lequel l'électrolyte de demi-cellule négative est un fluide et comporte des espèces chimiques réversiblement réductibles et oxydables d'un premier couple redox, et l'électrolyte de demi-cellule positive est un fluide et comporte des espèces chimiques réversiblement réductibles et oxydables d'un deuxième couple redox.

39. Procédé selon la revendication 38, le procédé étant effectué en utilisant le système de l'une des revendications 32 à 36, le procédé comprenant en outre : l'écoulement de l'électrolyte de demi-cellule négative via un troisième conduit d'électrolyte à partir du réservoir d'électrolyte de demi-cellule négative à travers un troisième groupe de demi-cellules de demi-cellules négatives combinées de manière fluidique et en retour vers le réservoir d'électrolyte de demi-cellule négative ; et l'écoulement de l'électrolyte de demi-cellule positive via un quatrième conduit d'électrolyte à partir du réservoir d'électrolyte de demi-cellule positive à travers un quatrième groupe de demi-cellules de demi-cellules positives combinées de manière fluidique et en retour vers le réservoir d'électrolyte de demi-cellule positive ; dans lequel l'électrolyte de demi-cellule négative s'écoule en parallèle dans les premier et troisième groupes de demi-cellules ; et l'électrolyte de demi-cellule positive s'écoule en parallèle dans les deuxième et quatrième groupes de demi-cellules.

40. Procédé selon la revendication 38 ou 39, dans lequel au moins l'un de l'électrolyte de demi-cellule négative et de l'électrolyte de demi-cellule positive s'écoule contre les électrodes à flux des demi-cellules respectives et/ou le long de celles-ci.
